# EUROPEAN PATENT SPECIFICATION

(11) **EP 4 212 353 B1**
(45) Date of publication and mention of the grant of the patent: **05.08.2026**
(21) Application number: 22215905.5
(22) Date of filing: 22.12.2022
(51) Int. Cl.: B60B 5/02, B60B 1/06, B32B 15/08, B32B 25/04, B29C 45/16, B29C 45/00, B29D 99/00, B29C 45/14, B32B 37/12, B29K 305/00, B29K 705/00, B29L 30/00, B29L 31/32, B32B 37/24, B60C 7/00

(54) **LAMINATED PRODUCT, AIRLESS TIRE AND MANUFACTURING METHOD THEREFOR**
LAMINIERTES PRODUKT, LUFTLOSER REIFEN UND HERSTELLUNGSVERFAHREN DAFÜR
PRODUIT STRATIFIÉ, PNEU SANS AIR ET SON PROCÉDÉ DE FABRICATION

(30) Priority: 13.01.2022 JP 2022003918
(43) Date of publication of application: 19.07.2023
(73) Proprietor: Sumitomo Rubber Industries, Ltd., Kobe-shi, Hyogo 651-0072 (JP)
(72) Inventor: TAKEDA, Ai, Kobe-shi, 651-0072 (JP)
(74) Representative: Manitz Finsterwald Patent- und Rechtsanwaltspartnerschaft mbB

(56) References cited:
- WO-A1-2020/051715
- DE-A1- 19 715 721
- FR-A- 1 225 376

## Description

### BACKGROUND OF THE INVENTION

### Field of the Invention

The present invention relates to an airless tire comprising a laminated product and a manufacturing method therefor.

### Background Art

Conventionally, laminated products in each of which a metal body and a resin body are joined together have been used for various purposes. DE 197 15 721 A1 discloses a wheel for inline skates, which comprises a hub made of a metallic material, an annular tread which contacts the ground, and an intermediate part arranged between the hub and the tread, wherein the intermediate part is made of plastic and the tread is made of a thermoplastic resin or an elastomer. FR 1 225 376 A discloses a wheel for materials handling vehicles, wherein the wheel includes: a wheel body which consists of a light metal and has a rim and a hub; a tread composed of polyamide; and, between the metallic wheel body and the tread, an intermediate layer formed of Bakelite on the metal surface, and a band composed of elastic material arranged between the Bakelite layer and the tread. In recent years, such laminated products have been used for developing airless tires.

WO 2020/051715 A1 discloses a non-pneumatic tire comprising a hub and a tread, wherein a spoked support is disposed between the hub and the tread. Japanese Laid-Open Patent Publication No. 2016-130071 describes an airless tire. The airless tire includes: a cylindrical tread ring having a ground-contact surface; a hub that is disposed inward of the tread ring in a radial direction and that is to be fixed to an axle; and spokes connecting the tread ring and the hub to each other.

The hub is formed of a metal body. Meanwhile, each of the spokes is formed of a resin body. Therefore, a complex composed of the hub and the spoke corresponds to the above laminated product. The hub and the spoke are joined together via an adhesive.

In general, a metal body and a resin body have different coefficients of thermal expansion. Thus, if the metal body and the resin body experience thermal shrinkage or the like, a stress is applied to a cured product of the adhesive therebetween. Such a stress is absorbed by the adhesive, and thus the joining strength between the metal body and the resin body is maintained. However, further improvement of the joining strength between the metal body and the resin body has been desired from the viewpoint of improving the durability of the laminated product.

The present invention has been made in view of the above circumstances, and a main object of the present invention is to provide an airless tire comprising a laminated product in which the joining strength between a metal body and a resin body can be improved.

### SUMMARY OF THE INVENTION

The present invention is directed to an airless tire comprising a laminated product in which a metal body and a resin body are joined together, the laminated product including: the metal body; the resin body; and an adhesion layer disposed between the metal body and the resin body, and containing a thermoplastic resin or a thermoplastic elastomer, wherein the adhesion layer has a molding shrinkage not higher than 1.5%, the airless tire comprising a hub portion to be fixed to an axle; an annular tread ring to be brought into contact with a ground; and a spoke portion connecting the hub portion and the tread ring to each other, wherein the metal body forms the hub portion, and the resin body forms the spoke portion.

Since the airless tire comprising the joined product according to the present invention employs the above configuration, the joining strength between the metal body and the resin body can be improved.

### BRIEF DESCRIPTION OF THE DRAWINGS

FIG. 1 is a partial cross-sectional view of a laminated product according to the present embodiment;
FIGS. 2(a) to (c) are each a cross-sectional view for explaining a manufacturing method for the laminated product according to the present embodiment; and
FIG. 3 is a partial front view of an airless tire according to the present embodiment as seen in an axle direction.

### DETAILED DESCRIPTION

Hereinafter, an embodiment of the present invention will be described with reference to the drawings. It should be understood that the drawings contain exaggerated expressions or expressions that differ from the dimensional ratio of the actual structure in order to help the understanding of the contents of the present invention. In addition, the same or common elements are denoted by the same reference characters throughout each embodiment, and redundant descriptions thereof are omitted. Furthermore, the specific configurations shown in the embodiment and the drawings are for understanding the contents of the present invention, and the present invention is not limited to the specific configurations shown.

### [Laminated Product (First Embodiment)]

### [Overall Structure of Laminated Product]

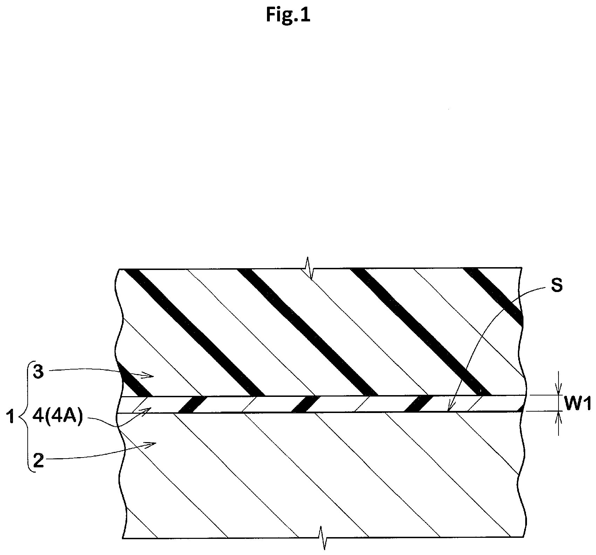

FIG. 1 is a partial cross-sectional view of a laminated product 1 according to the present embodiment. As shown in FIG. 1, in the laminated product 1 according to the present embodiment, a metal body 2 and a resin body 3 are joined together. An adhesion layer 4 is disposed between the metal body 2 and the resin body 3.

### [Metal Body]

The metal body 2 is not particularly limited as long as the metal body 2 can be joined to the resin body 3 via the adhesion layer 4 as shown in FIG. 1. For the metal body 2 in the present embodiment, it is possible to use, for example, an iron-based metal, an aluminum-based metal, a magnesium-based metal, a copper-based metal, a titanium-based metal, or the like.

Examples of the iron-based metal include iron, steel, stainless steel, and the like. Examples of the aluminum-based metal include aluminum, aluminum alloys, and the like. Examples of the magnesium-based metal include magnesium alloys and the like. Examples of the copper-based metal include copper, copper alloys, and the like. Examples of the titanium-based metal include titanium, titanium alloys, and the like.

Among the above metals, an aluminum-based metal is used for the metal body 2 in the present embodiment. Such an aluminum-based metal has characteristics of being more lightweight and having a higher processability than the other metals.

### [Resin Body]

The resin body 3 is not particularly limited as long as the resin body 3 can be joined to the metal body 2 via the adhesion layer 4. The resin body 3 in the present embodiment is formed from a polymer material. The polymer material is not particularly limited but is preferably a polymer material that can be molded as a resin or an elastomer through an injecting method or a casting method.

Examples of the resin or the elastomer include polyolefins, polyvinyl chloride, polystyrene, methacrylic resins, polycarbonates, polyamides, polyimides, polyacetal, fluorine resins, urea resins, phenol resins, polyesters, polyurethanes, epoxy resins, melamine resins, silicon resins, and the like.

Among the above polymer materials (the resins or the elastomers), a thermoplastic elastomer is preferably used in the present embodiment from the viewpoint of moldability, processability, and the degree of freedom in material designing. The thermoplastic elastomer is not particularly limited but is preferably a thermoplastic polyester elastomer, a thermoplastic polyamide elastomer, or a thermoplastic polyurethane elastomer. Among these thermoplastic elastomers, a thermoplastic polyester elastomer resin can be suitably used from the viewpoint of improving durability.

Meanwhile, in a conventional laminated product such as one described in the above Japanese Laid-Open Patent Publication No. 2016-130071, a metal body 2 and a resin body 3 are joined together via an adhesive. In general, a resin body 3 has a coefficient of thermal expansion different from that of a metal body 2, and thus, if the metal body 2 and the resin body 3 experience thermal shrinkage or the like, a stress is applied to a cured product of the adhesive therebetween. Such a stress is absorbed by the adhesive. Consequently, the joining strength between the metal body 2 and the resin body 3 is maintained. However, further improvement of the joining strength between the metal body 2 and the resin body 3 has been desired from the viewpoint of improving the durability of the laminated product.

The present disclosers have, as a result of thorough studies, found that a stress that is caused by thermal shrinkage or the like and that is applied between the metal body 2 and the resin body 3 having different coefficients of thermal expansion can be effectively absorbed by a thermoplastic resin and a thermoplastic elastomer so that the adhesion strength between the metal body 2 and the resin body 3 is improved. In the laminated product 1 according to the present embodiment, the adhesion layer 4 containing a thermoplastic resin or a thermoplastic elastomer is disposed between the metal body 2 and the resin body 3 on the basis of this finding.

### [Adhesion Layer]

The adhesion layer 4 in the present embodiment contains a thermoplastic resin or a thermoplastic elastomer. Consequently, the laminated product 1 according to the present embodiment can effectively absorb a stress applied owing to thermal shrinkage or the like of the metal body 2 and the resin body 3, whereby the joining strength between the metal body 2 and the resin body 3 is improved. Therefore, the durability of the laminated product 1 is improved.

The adhesion layer 4 is not particularly limited as long as the adhesion layer 4 contains a thermoplastic resin or a thermoplastic elastomer. The thermoplastic resin and the thermoplastic elastomer are preferably a thermoplastic resin and a thermoplastic elastomer that can be molded through an injecting method or a casting method. Although the adhesion layer 4 in the present embodiment is formed from only the thermoplastic resin or the thermoplastic elastomer, the material of the adhesion layer 4 is not particularly limited.

Examples of the thermoplastic resin or the thermoplastic elastomer include thermoplastic polyolefins, polyvinyl chloride, polystyrene, methacrylic resins, polycarbonates, polyamides, polyimides, polyacetal, fluorine resins, urea resins, phenol resins, polyesters, polyurethanes, epoxy resins, melamine resins, silicon resins, and the like.

In the present embodiment, among the above thermoplastic resins and thermoplastic elastomers, a thermoplastic polyester elastomer, a thermoplastic polyamide elastomer, and a thermoplastic polyurethane elastomer are preferable from the viewpoint of moldability, processability, and the degree of freedom in material designing. Among these thermoplastic elastomers, a thermoplastic polyester elastomer resin can be suitably used from the viewpoint of improving the adhesion strength between the metal body 2 and the resin body 3.

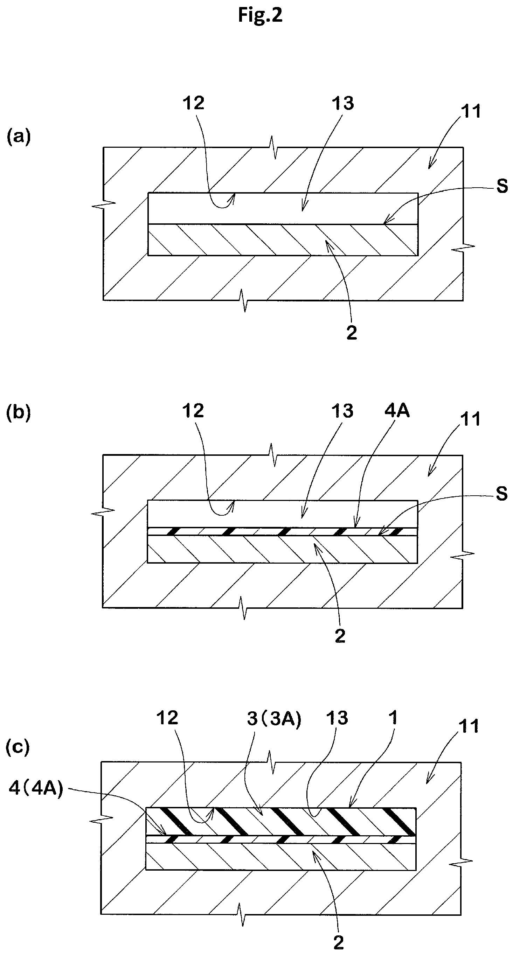

Further, the adhesion layer 4 in the present embodiment has a molding shrinkage that is limited to be not higher than 1.5%. This molding shrinkage refers to an extent to which, as a result of curing the adhesion layer (the thermoplastic resin or the thermoplastic elastomer) 4, the adhesion layer 4 shrinks relative to a mold 11 (shown in FIG. 2(c)) for forming the laminated product 1. A lower molding shrinkage enables a greater decrease in shrinkage resulting from curing the adhesion layer 4 and thus enables more effective absorption of a stress that is caused by thermal shrinkage or the like and that is applied between the metal body 2 and the resin body 3. Therefore, the joining strength between the metal body 2 and the resin body 3 is improved. In order to effectively exhibit such an advantageous effect, the molding shrinkage is preferably not higher than 1.1%. Meanwhile, if the molding shrinkage is excessively low, it becomes difficult to take out the laminated product 1 from the mold 11. Considering this, the molding shrinkage is preferably set to be not lower than 0.3%. The molding shrinkage is measured in accordance with JIS K 7152-4 (2005).

The adhesion layer 4 has a thickness W1 preferably set to 20 to 200 µm. If the thickness W1 is set to be not smaller than 20 µm, a stress that is caused by thermal shrinkage or the like and that is applied between the metal body 2 and the resin body 3 can be effectively absorbed, whereby the joining strength between the metal body 2 and the resin body 3 can be improved. Further, it becomes easy to mold the adhesion layer 4, and a variation in the thickness W1 is also decreased (to, for example, ±2.5 µm). Meanwhile, if the thickness W1 is set to be not larger than 200 µm, decrease in the cohesive strength of the adhesion layer 4 due to increase in the thickness is suppressed, whereby the joining strength is maintained. From such a viewpoint, the thickness W1 is preferably not smaller than 60 µm, and meanwhile, preferably not larger than 160 µm.

The adhesion layer 4 has a spring constant preferably set to 3.0 to 20.0 N/mm. If the spring constant is set to be not higher than 20.0 N/mm, a stress that is caused by thermal shrinkage or the like and that is applied between the metal body 2 and the resin body 3 can be effectively absorbed. Meanwhile, if the spring constant is set to be not lower than 3.0 N/mm, decrease in the cohesive strength is suppressed, whereby the joining strength is maintained. From such a viewpoint, the spring constant is preferably not higher than 16.0 N/mm, and meanwhile, preferably not lower than 7.0 N/mm.

For measurement of the spring constant of the adhesion layer 4, a No. 7 dumbbell type test piece (hereinafter, sometimes referred to simply as "test piece") formed of the adhesion layer 4 is made first. Next, a tensile test is performed on the test piece under a condition of a temperature of 23°C in accordance with "Rubber, vulcanized or thermoplastic - Determination of tensile stress-strain properties" of JIS K 6251: 2010. Then, an elongation at break at 23°C (EB (23°C) of the test piece is measured, and, on the basis of a curve of positional shift and elongation having occurred at this time, the spring constant of the adhesion layer 4 is measured (calculated). The spring constant can be set as appropriate by adjusting the hardness of the adhesion layer 4 (i.e., by adjusting the composition or the molecular weight of the thermoplastic resin or the thermoplastic elastomer of the adhesion layer 4).

The adhesion layer 4 has a tensile shear strength at 80°C preferably set to be not lower than 1.0 MPa. If the tensile shear strength at 80°C is set to be not lower than 1.0 MPa, cohesive fracture of the adhesion layer 4 is suppressed in, for example, a high-temperature environment in which the laminated product 1 is used (for example, during running with an airless tire including the laminated product 1). From such a viewpoint, the tensile shear strength at 80°C is preferably set to be not lower than 3.0 MPa. The tensile shear strength is measured in accordance with "Determination of tensile lap-shear strength of rigid-to-rigid bonded assemblies" of JIS K 6850. Specifically, the metal body 2 and the resin body 3 are positionally shifted along an adhesion surface so as to apply tensile shear stress to the adhesion layer 4, and a fracture stress at which the adhesion layer 4 has been fractured owing to the tensile shear stress is measured as the tensile shear strength. The tensile shear strength can be set as appropriate by adjusting the hardness or the thickness W1 of the adhesion layer 4.

The adhesion layer 4 has a complex elastic modulus E* at 70°C preferably set to 30 to 150 MPa. If the complex elastic modulus E* at 70°C is set to be not lower than 30 MPa, the rigidity of the adhesion layer 4 is maintained in, for example, an environment in which the laminated product 1 is used (for example, during running with an airless tire including the laminated product 1), and the joining strength between the metal body 2 and the resin body 3 is improved. Meanwhile, if the complex elastic modulus E* at 70°C is set to be not higher than 150 MPa, the flexibility of the adhesion layer 4 is ensured, and the adhesion layer 4 is inhibited from peeling between the metal body 2 and the resin body 3. From such a viewpoint, the complex elastic modulus E* at 70°C is preferably not lower than 40 MPa, and meanwhile, preferably not higher than 120 MPa.

The complex elastic modulus E* is measured by using a dynamic viscoelasticity measuring device (EPLEXOR series) manufactured by NETZSCH-Gerätebau GmbH under the following measurement conditions in accordance with the stipulation in JIS K 6394.
Frequency: 10 Hz
Initial strain: 5%
Dynamic strain: ±1%
Temperature: 70°C
Deformation mode: tension

### [Recess-Projection Portion]

A first surface S, of the metal body 2, with which the adhesion layer 4 is to be brought into contact preferably has a recess-projection portion (not shown) in order to increase the adhesion strength of the metal body 2 to the adhesion layer 4. Such a recess-projection portion exhibits an anchor effect with respect to the adhesion layer 4, whereby the adhesion strength between the metal body 2 and the adhesion layer 4 is increased.

The recess-projection portion (not shown) can be formed through, for example, a known base treatment by means of laser machining, shot blasting, or the like. In the present embodiment, laser machining which enables a recess-projection portion having an arbitrarily-set roughness to be formed with high accuracy is employed.

### [Adhesive Layer]

An adhesive layer (cured product) not shown may be interposed between the adhesion layer 4 and the metal body 2. Such an adhesive layer can further increase the joining strength between the metal body 2 and the adhesion layer 4.

The adhesive is not particularly limited as long as the adhesive can improve the joining strength between the metal body 2 and the adhesion layer 4. As the adhesive in the present embodiment, it is possible to suitably use, for example, adhesives with product names "Chemlok 218E", "Chemlok 210", and "Chemlok IMB1040" ("Chemlok" is a registered trademark) manufactured by LORD Japan, INC. In addition, other examples of the adhesive include adhesives with product names "METALOC C-12" and "METALOC UA" ("METALOC" is a registered trademark) manufactured by TOYOKAGAKU KENKYUSHO CO., LTD.

The adhesive layer has a thickness (not shown) preferably set to 10 to 50 µm. If the thickness is set to be not smaller than 10 µm, the joining strength between the metal body 2 and the adhesion layer 4 can be increased. Meanwhile, if the thickness is set to be not larger than 50 µm, the thickness of the adhesive layer is inhibited from being increased more than necessary. Consequently, the adhesive layer is inhibited from being broken owing to a strain applied between the metal body 2 and the resin body 3. From such a viewpoint, the thickness is preferably not smaller than 15 µm, and meanwhile, preferably not larger than 35 µm.

### [Manufacturing Method for Laminated Product]

Next, a manufacturing method for the laminated product 1 according to the present embodiment (hereinafter, sometimes referred to simply as "manufacturing method") will be described. FIGS. 2(a) to (c) are each a cross-sectional view for explaining the manufacturing method for the laminated product according to the present embodiment.

### [Melt Thermoplastic Resin or Thermoplastic Elastomer]

In the manufacturing method according to the present embodiment, a step of melting the thermoplastic resin or the thermoplastic elastomer (in the present example, a thermoplastic elastomer 4A) for forming the adhesion layer 4 is performed first. For melting, a known injection molding machine (not shown) is used, for example. In the present embodiment, the temperature of the thermoplastic elastomer 4A is adjusted (to, for example, 200 to 300°C) in a cylinder (not shown) of the injection molding machine. Consequently, the thermoplastic elastomer 4A is melted to take liquid form.

### [Bring Thermoplastic Resin or Thermoplastic Elastomer Having Been Melted into Contact with Metal Body]

Next, in the manufacturing method according to the present embodiment, a step of bringing the thermoplastic resin or the thermoplastic elastomer (in the present example, the thermoplastic elastomer 4A) having been melted into contact with the metal body 2 is performed.

In this step, the metal body 2 is set in, for example, a cavity 12 of the mold 11 first as shown in FIG. 2(a). At this time, an empty space 13 is left in the cavity 12 such that the adhesion layer 4 and the resin body 3 (shown in FIG. 2(c)) can be supplied thereinto. In addition, the metal body 2 is positioned such that the first surface S thereof faces the empty space 13 of the cavity 12.

Next, in this step in the present embodiment, as shown in FIG. 2(b), the thermoplastic elastomer 4A in liquid form is supplied (injected) from the cylinder (not shown) of the injection molding machine onto the first surface S, of the metal body 2, with which the adhesion layer 4 is to be brought into contact. Consequently, the thermoplastic elastomer 4A having been melted can be brought into contact with the first surface S of the metal body 2. In the present embodiment, the thermoplastic elastomer 4A is formed in the form of a sheet on the first surface S.

In the case where the recess-projection portion (not shown) is formed on the first surface S of the metal body 2, a step of forming the recess-projection portion on the first surface S is preferably performed prior to the step of bringing the thermoplastic elastomer 4A into contact with the metal body 2. Formation of the recess-projection portion is performed in accordance with the above procedure.

In the case where the adhesive layer (cured product) not shown is interposed between the adhesion layer 4 and the metal body 2, the adhesive is preferably applied on the first surface S of the metal body 2 prior to the step of bringing the thermoplastic elastomer 4A into contact with the metal body 2. A step of preheating the adhesive applied on the first surface S may be performed in order to improve the adhesive force of the adhesive. For preheating the adhesive, a warmer (not shown) provided separately from the mold 11 shown in FIG. 2(b) is preferably used, for example. The temperature of the adhesive is preferably set to, for example, 30 to 100°C. The preheating time is preferably set to, for example, 10 minutes to 30 minutes.

### [Melt Resin]

Next, in the manufacturing method according to the present embodiment, a step of melting a resin 3A (shown in FIG. 2(c)) for forming the resin body 3 is performed. In the present embodiment, a known injection molding machine (not shown) is used, for example. In the present embodiment, the temperature of the resin 3A is adjusted (to, for example, 200 to 300°C) in a cylinder (not shown) of the injection molding machine. Consequently, the resin 3A is melted to take liquid form.

### [Bring Resin in Liquid Form into Contact with Thermoplastic Resin or Thermoplastic Elastomer]

Next, in the manufacturing method according to the present embodiment, a step of bringing the resin 3A in liquid form into contact with the thermoplastic resin or the thermoplastic elastomer (in the present example, the thermoplastic elastomer 4A) having been brought into contact with the metal body 2 is performed. In this step in the present embodiment, the resin 3A in liquid form is supplied (injected) from the cylinder (not shown) of the injection molding machine into the empty space 13 of the cavity 12 as shown in FIG. 2(c). Consequently, the resin 3A in liquid form can be brought into contact with the thermoplastic elastomer 4A in the present embodiment.

### [Join Together Metal Body and Resin Body]

Next, in the manufacturing method according to the present embodiment, a step of curing the thermoplastic resin or the thermoplastic elastomer (in the present example, the thermoplastic elastomer 4A) and the resin 3A so as to join together the metal body 2 and the resin body 3 via the adhesion layer 4 is performed. In the present embodiment, the thermoplastic elastomer 4A and the resin 3A (thermoplastic resin) are cooled so as to be cured in the cavity 12. Consequently, the laminated product 1 (shown in FIG. 1) in which the metal body 2 and the resin body 3 have been joined together (integrally molded) via the adhesion layer 4 is obtained.

In the manufacturing method according to the present embodiment, the adhesion layer 4 containing the thermoplastic resin or the thermoplastic elastomer is disposed between the metal body 2 and the resin body 3, and thus a stress applied owing to thermal shrinkage or the like of the metal body 2 and the resin body 3 can be effectively absorbed. Further, the adhesion layer (the thermoplastic resin or the thermoplastic elastomer) 4 has a molding shrinkage that is limited to be not higher than 1.5%. This enables decrease in shrinkage resulting from curing the adhesion layer 4. Consequently, a stress that is caused by thermal shrinkage or the like and that is applied between the metal body 2 and the resin body 3 can be more effectively absorbed. Therefore, a laminated product 1 in which the joining strength between the metal body 2 and the resin body 3 has been improved can be manufactured through the manufacturing method according to the present embodiment.

In addition, in the case where the recess-projection portion (not shown) is formed on the first surface S (shown in FIG. 2(b)), of the metal body 2, with which the adhesion layer 4 is to be brought into contact, an anchor effect with respect to the adhesion layer 4 can be exhibited. Thus, a laminated product 1 in which the adhesion strength between the metal body 2 and the adhesion layer 4 has been further improved can be manufactured. Further, in the case where the adhesive layer (cured product) not shown is interposed between the adhesion layer 4 and the metal body 2, a laminated product 1 in which the adhesion strength between the metal body 2 and the adhesion layer 4 has been further improved can be manufactured.

### [Airless Tire]

Next, an airless tire including the laminated product 1 will be described.

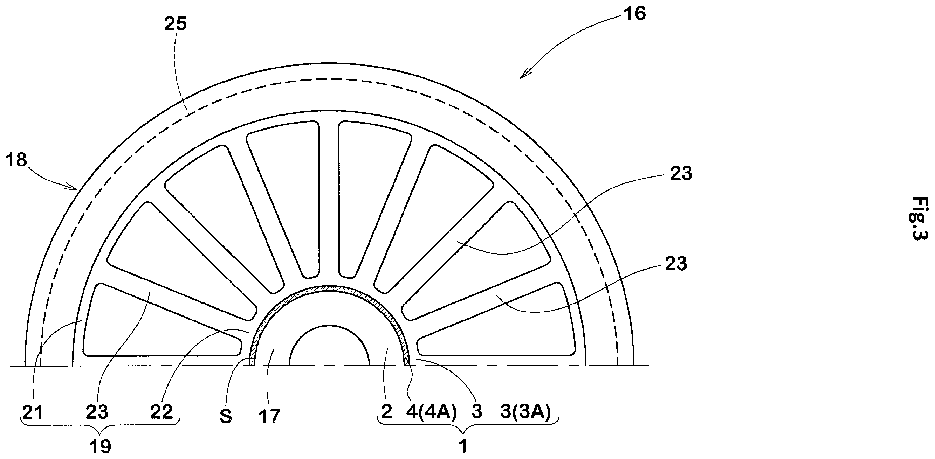

FIG. 3 is a partial front view of the airless tire according to the present embodiment as seen in an axle direction. As shown in FIG. 3, an airless tire 16 includes: a hub portion 17 to be fixed to an axle; an annular tread ring 18 to be brought into contact with a ground; and a spoke portion 19 connecting the hub portion 17 and the tread ring 18 to each other.

The hub portion 17 is formed from, for example, a metal material.

The tread ring 18 is formed from vulcanized rubber. The tread ring 18 may include, for example, a reinforcing cord layer 25 (indicated by a broken line) therein in order to increase the rigidity thereof in a circumferential direction or the like.

The spoke portion 19 in the present embodiment includes members such as: an outer portion 21 on an outer side in a tire radial direction; an inner portion 22 on an inner side in the tire radial direction; and a plurality of spoke elements 23. These members are integrated with one other.

The outer portion 21 is an annular member joined to the inner circumferential surface of the tread ring 18. The inner portion 22 is an annular member joined to the outer circumferential surface of the hub portion 17. Each of the spoke elements 23 extends in the tire radial direction between the outer portion 21 and the inner portion 22 so as to establish connection therebetween.

In the present embodiment, the metal body 2 (shown in FIG. 1) of the laminated product 1 forms the hub portion 17, and the resin body 3 (shown in FIG. 1) of the laminated product 1 forms the spoke portion 19 (inner portion 22). The adhesion layer 4 containing the thermoplastic resin or the thermoplastic elastomer is disposed between the hub portion 17 and the spoke portion 19. Thus, the laminated product 1 is used for the airless tire 16 according to the present embodiment.

In the laminated product 1, the bondability between the metal body 2 (hub portion 17) and the resin body 3 (spoke portion 19) can be improved by the adhesion layer 4 containing the thermoplastic resin or the thermoplastic elastomer. Further, since the adhesion layer 4 has a molding shrinkage that is limited to be not higher than 1.5%, the bondability between the metal body 2 (hub portion 17) and the resin body 3 (spoke portion 19) can be further improved. Consequently, in the airless tire 16 according to the present embodiment, the joining strength between the hub portion 17 and the spoke portion 19 (inner portion 22) can be increased, whereby the durability (high-speed durability) of the airless tire 16 can be improved.

### [Manufacturing Method for Airless Tire]

Next, a manufacturing method for the airless tire 16 (hereinafter, sometimes referred to simply as "manufacturing method") according to the present embodiment will be described. As the manufacturing method according to the present embodiment, a publicly known procedure described in a patent document (Japanese Laid-Open Patent Publication No. 2015-217717) or the like is employed, for example. Hereinafter, a procedure that is not publicly known will be mainly described, and a procedure that is publicly known may be omitted.

### [Prepare Hub Portion]

In the manufacturing method according to the present embodiment, a step of preparing the hub portion 17 (metal body 2) is performed first. In the case where the recess-projection portion (not shown) is formed on the first surface S, of the hub portion 17, with which the adhesion layer 4 is to be brought into contact, a step of forming the recess-projection portion on the first surface S is preferably performed prior to a step of bringing the thermoplastic elastomer 4A into contact with the hub portion 17. Formation of the recess-projection portion is performed in accordance with the above procedure.

### [Vulcanize-Mold Tread Ring]

Next, in the manufacturing method according to the present embodiment, a step of vulcanize-molding the annular tread ring 18 is performed. In this step, a surface-treated layer (not shown) is formed on the inner circumferential surface of the tread ring 18. The surface-treated layer is formed through, for example, chlorination treatment.

### [Set Hub Portion and Tread Ring in Mold]

Next, in the manufacturing method according to the present embodiment, a step of setting the hub portion 17 and the tread ring 18 in a cavity of a mold (neither of which is shown) is performed. In the cavity of the mold, after these members are set, an empty space (not shown) in which the adhesion layer 4 and the spoke portion 19 are to be molded is formed.

### [Melt Thermoplastic Resin or Thermoplastic Elastomer]

Next, in the manufacturing method according to the present embodiment, a step of melting the thermoplastic resin or the thermoplastic elastomer (in the present example, the thermoplastic elastomer 4A) for forming the adhesion layer 4 is performed. In the melting of the thermoplastic elastomer 4A, the thermoplastic elastomer 4A is melted to take liquid form in the cylinder (not shown) of the injection molding machine in the same manner as in the manufacturing method for the laminated product 1 shown in FIGS. 2(a) to (c).

### [Bring Thermoplastic Resin or Thermoplastic Elastomer Having Been Melted into Contact with Hub Portion]

Next, in the manufacturing method according to the present embodiment, a step of bringing the thermoplastic resin or the thermoplastic elastomer (in the present example, the thermoplastic elastomer 4A) having been melted into contact with the hub portion 17 formed of the metal body 2 is performed.

In this step, the thermoplastic elastomer 4A in liquid form is supplied (injected) from the cylinder (not shown) of the injection molding machine onto the first surface S, of the hub portion 17 (metal body 2), with which the adhesion layer 4 is to be brought into contact, in the same manner as in the manufacturing method for the laminated product 1 shown in FIGS. 2(a) to (c). Consequently, the thermoplastic elastomer 4A having been melted can be brought into contact with the first surface S of the hub portion 17. In the present embodiment, the thermoplastic elastomer 4A is formed in the form of a sheet on the first surface S.

In the case where the adhesive layer (cured product) not shown is interposed between the adhesion layer 4 and the hub portion 17, the adhesive is preferably applied on the first surface S of the hub portion 17 prior to the step of bringing the thermoplastic elastomer 4A into contact with the hub portion 17. The above step of preheating the adhesive applied on the first surface S may be performed in order to improve the adhesive force of the adhesive.

### [Melt Resin]

Next, in the manufacturing method according to the present embodiment, a step of melting the resin 3A for forming the spoke portion 19 (resin body 3) is performed. The melting of the resin 3A is performed on the basis of the same procedure as that in the manufacturing method for the laminated product 1 shown in FIGS. 2(a) to (c).

### [Bring Resin in Liquid Form into Contact with Thermoplastic Resin or Thermoplastic Elastomer]

Next, in the manufacturing method according to the present embodiment, a step of bringing the resin 3A in liquid form into contact with the thermoplastic resin or the thermoplastic elastomer (in the present example, the thermoplastic elastomer 4A) having been brought into contact with the hub portion 17 is performed.

In this step, the resin 3A in liquid form is supplied from the cylinder (not shown) of the injection molding machine into the empty space of the cavity of the mold (none of which is shown). Consequently, the resin 3A in liquid form can be brought into contact with the thermoplastic elastomer 4A in this step.

### [Join Together Hub Portion and Spoke Portion]

Next, in the manufacturing method according to the present embodiment, a step of curing the thermoplastic resin or the thermoplastic elastomer (in the present example, the thermoplastic elastomer 4A) and the resin 3A so as to join together the hub portion 17 and the spoke portion 19 is performed. In the present embodiment, the thermoplastic elastomer 4A and the resin 3A (thermoplastic resin) are cooled so as to be cured in the cavity of the mold (neither of which is shown). This leads to obtaining of the airless tire 16 (shown in FIG. 3) in which the tread ring 18 has been integrated with the laminated product 1 in which the hub portion 17 and the spoke portion 19 have been joined together (integrally molded) via the adhesion layer 4.

In the manufacturing method according to the present embodiment, the adhesion layer 4 containing the thermoplastic resin or the thermoplastic elastomer is disposed between the hub portion 17 and the spoke portion 19, and thus a stress applied owing to thermal shrinkage or the like of the hub portion 17 and the spoke portion 19 can be effectively absorbed. Further, the adhesion layer (the thermoplastic resin or the thermoplastic elastomer) 4 has a molding shrinkage that is limited to be not higher than 1.5%. This enables decrease in shrinkage resulting from curing the adhesion layer 4. Consequently, a stress that is caused by thermal shrinkage or the like and that is applied between the hub portion 17 and the spoke portion 19 can be more effectively absorbed. Therefore, an airless tire 16 in which the joining strength between the hub portion 17 and the spoke portion 19 has been improved can be manufactured through the manufacturing method according to the present embodiment.

In addition, in the case where the recess-projection portion (not shown) is formed on the first surface S of the hub portion 17, an anchor effect with respect to the adhesion layer 4 can be exhibited. Thus, an airless tire 16 in which the joining strength between the hub portion 17 and the spoke portion 19 has been improved can be manufactured. Further, in the case where the adhesive layer (cured product) not shown is interposed between the adhesion layer 4 and the hub portion 17, an airless tire 16 in which the adhesion strength between the hub portion 17 and the adhesion layer 4 has been further improved can be manufactured. In this manner, an airless tire having an improved durability (high-speed durability) can be manufactured through the manufacturing method according to the present embodiment.

Although the particularly preferred embodiment of the present invention has been described in detail above, the present invention is not limited to the embodiment shown, and various modifications can be made to implement the present invention.

### EXAMPLES

### [Examples A]

More specific and non-limiting examples of the present invention will be described below.

A sample of a metal body having a first surface on which a recess-projection portion was formed was prepared. Next, the sample of the metal body was put into a cavity of a mold, and then a thermoplastic elastomer for forming an adhesion layer and a resin for forming a resin body were supplied into an empty space of the cavity. Then, the thermoplastic elastomer and the resin were cured, whereby a laminated product in which the metal body and the resin body were joined together via the adhesion layer was formed. The molding shrinkage of the adhesion layer in each of examples 1 to 4 was set to be not higher than 1.5%. Meanwhile, the molding shrinkage in a comparative example was set to 2.0%. In addition, in each of examples 1 to 4 and the comparative example, the thickness W1 of the adhesion layer was adjusted on the basis of Table 1, and meanwhile, the thickness of the resin layer was adjusted to 2.0 mm.

From each of the laminated products, a strip-shaped test piece having a width of 25 mm and a length of 12 mm was cut out as a sample of the laminated product. Specifications common to the examples are as follows.
Metal body: aluminum alloy
Ten-point average roughness Rz of recess-projection portion: 614 µm
Resin body (resin): thermoplastic polyester elastomer
Adhesion layer: thermoplastic polyamide elastomer
Spring constant of adhesion layer: 4.8 N/mm
Complex elastic modulus E* at 70°C of adhesion layer: 100 MPa

Then, shear force tests (T-peel tests) were conducted in order to evaluate the joining strengths between the metal bodies and the resin bodies of the laminated products. Each of the shear force tests was conducted in a room-temperature environment (23°C) at a humidity of 55% and in a high-temperature environment (80°C) in accordance with JIS K 6854.

The results of the tests are indicated in Table 1.

**[Table 1]**

| | Example 1 | Example 2 | Example 3 | Example 4 | Comparative example |
|---|---|---|---|---|---|
| Molding shrinkage of adhesion layer (%) | 0.8 | 0.8 | 1.1 | 1.5 | 2.0 |
| Thickness W1 of adhesion layer (µm) | 20 | 50 | 100 | 200 | 250 |
| Shear force [N/mm²] (80°C) | Material breakage | Material breakage | Material breakage | Material breakage | 0.8 |
| High-speed durability (index) | 100 | 115 | 126 | 120 | 80 |

According to the results of the tests, in each of examples 1 to 4 in which the molding shrinkage of the adhesion layer was set to be not higher than 1.5%, material breakage occurred at the resin body, and peeling occurred at neither the interface between the metal body and the adhesion layer nor the interface between the adhesion layer and the resin body, in the shear force test (80°C). Meanwhile, in the comparative example in which the molding shrinkage was set to 2.0%, peeling occurred at the interface between the metal body and the adhesion layer or between the adhesion layer and the resin body in the shear force test (80°C), and the shear force (N/mm²) exerted at the time of the peeling is indicated in Table 1.

In each of examples 1 to 4, material breakage occurred, and the joining strength between the metal body and the resin body was able to be improved as compared to the comparative example in which peeling at the interface occurred. Further, in each of examples 1 to 4, the thickness W1 of the adhesion layer was also set to fall within the preferable range, and thus the joining strength between the metal body and the resin body was able to be improved to a preferable level.

Next, airless tires were produced as samples from the laminated products in Table 1, and the high-speed durability of each of the airless tires was evaluated. The high-speed durability was evaluated as follows. That is, by using a drum tester, a load of 2.6 kN was applied to the airless tire, and, from start of rolling at an initial speed of 100 km/h, the speed was increased by 10 km/h each time of elapse of 10 minutes. Then, a speed lower by one step than (a speed obtained by subtracting 10 km/h from) the speed at which the airless tire sustained damage was indicated as an index with the result of example 1 being regarded as 100. A larger numerical value indicates a better high-speed durability.

According to the results of the tests, in each of examples 1 to 4, the bondability between the metal body and the resin body was able to be improved, and a high-speed durability (an index not smaller than 100) required of the airless tire was able to be exhibited unlike in the comparative example. Further, in each of examples 1 to 4, the thickness W1 of the adhesion layer was also set to fall within the preferable range, and thus the high-speed durability was able to be further improved.

### [Examples B]

Laminated products (examples 5 to 9) were produced on the basis of the thicknesses W1 of adhesion layers and the spring constants of the adhesion layers in Table 2. The molding shrinkage of each of the adhesion layers was set to 1.0%. Then, a shear force test was conducted in the same manner as in Examples A in order to evaluate the bondability between the metal body and the resin body of each of these laminated products. Specifications common to the laminated products are the same as those in Examples A, except for the thicknesses W1 and the spring constants in Table 2.

In addition, airless tires were produced as samples from the laminated products in Table 2, and the high-speed durability of each of the airless tires was evaluated. The shear force test and the evaluation of the high-speed durability were conducted according to the same procedures as those for Examples A. The results of the tests are indicated in Table 2.

**[Table 2]**

| | Example 5 | Example 6 | Example 7 | Example 8 | Example 9 |
|---|---|---|---|---|---|
| Thickness W1 of adhesion layer [µm] | 50 | 50 | 50 | 50 | 100 |
| Spring constant of adhesion layer [N/mm] | 1.6 | 4.8 | 7.4 | 18.1 | 4.8 |
| Shear force [N/mm²] (80°C) | 1.2 | 2.5 | 3.0 | Material breakage | Material breakage |
| High-speed durability (index) | 101 | 110 | 117 | 126 | 121 |

According to the results of the tests, in each of examples 5 to 9, the shear force was not lower than 1.0 N/mm² (a shear force required of the laminated product), or material breakage occurred. Thus, the joining strength between the metal body and the resin body was able to be improved, and the high-speed durability of the airless tire was also able to be improved. Further, in each of examples 6 to 9 in which the spring constant of the adhesion layer was set to fall within the preferable range, material breakage occurred, or the shear force was higher than that in example 5 in which the spring constant was outside the preferable range, and furthermore, the high-speed durability was also higher than that in example 5. Moreover, in example 9, the thickness of the adhesion layer was set to be larger than that in example 6, and thus material breakage was able to be caused at the resin body in the shear force test, and furthermore, the high-speed durability was also higher than that in example 6.

### [Examples C]

Laminated products (examples 10 to 15) were produced on the basis of the complex elastic moduli E* at 70°C of adhesion layers in Table 3. Then, a shear force test was conducted in the same manner as in Examples A in order to evaluate the bondability between the metal body and the resin body of each of these laminated products. Specifications common to the laminated products are the same as those in Examples A, except for the complex elastic moduli E* in Table 3. The molding shrinkage of each of the adhesion layers was set to 1.0%. The thickness W1 of the adhesion layer was set to 50 µm.

In addition, airless tires were produced as samples from the laminated products in Table 3, and the high-speed durability of each of the airless tires was evaluated. The shear force test and the evaluation of the high-speed durability were conducted according to the same procedures as those for Examples A. The results of the tests are indicated in Table 3.

**[Table 3]**

| | Example 10 | Example 11 | Example 12 | Example 13 | Example 14 | Example 15 |
|---|---|---|---|---|---|---|
| Complex elastic modulus E* of adhesion layer [MPa] (70°C) | 25.00 | 31.63 | 42.08 | 52.00 | 135.75 | 234.15 |
| Shear force [N/mm²] (80°C) | 1.3 | Material breakage | Material breakage | Material breakage | 2.0 | 1.2 |
| High-speed durability (index) | 100 | 112 | 126 | 115 | 127 | 107 |

According to the results of the tests, in each of examples 10 to 15, the shear force was not lower than the above value, or material breakage occurred. Thus, the joining strength between the metal body and the resin body was able to be improved, and the high-speed durability of the airless tire was also able to be improved. Further, in each of examples 11 to 14 in which the complex elastic modulus E* was set to fall within the preferable range, material breakage occurred, or the shear force was higher than that in each of examples 10 and 15 in which the complex elastic modulus E* was set to be outside the preferable range, and furthermore, the high-speed durability was also higher than those in examples 10 and 15.

### [Additional Notes]

Although the present disclosure has been described with the airless tire being presented as an example, the present disclosure is not limited thereto. For example, the present disclosure is applicable also to solid tires filled with rubber instead of air for pneumatic tires.

## Claims

1. An airless tire (16) comprising a laminated product (1) in which a metal body (2) and a resin body (3) are joined together, the laminated product (1) comprising:
the metal body (2); and
the resin body (3),
the airless tire (16) comprising:
a hub portion (17) to be fixed to an axle;
an annular tread ring (18) to be brought into contact with a ground; and
a spoke portion (19) connecting the hub portion (17) and the tread ring (18) to each other, wherein
the metal body (2) forms the hub portion (17), and
the resin body (3) forms the spoke portion (19),
**characterized by**
the laminated product (1) comprising an adhesion layer (4) disposed between the metal body (2) and the resin body (3), and containing a thermoplastic resin or a thermoplastic elastomer (4A), wherein the adhesion layer (4) has a molding shrinkage of not higher than 1.5%.

2. The airless tire (16) according to claim 1, wherein the adhesion layer (4) has a thickness of 20 to 200 µm.

3. The airless tire (16) according to claim 1 or 2, wherein the adhesion layer (4) has a spring constant of 3.0 to 20.0 N/mm.

4. The airless tire (16) according to any one of claims 1 to 3, wherein the adhesion layer (4) has a tensile shear strength at 80°C not lower than 1.0 MPa.

5. The airless tire (16) according to any one of claims 1 to 4, wherein the adhesion layer (4) has a complex elastic modulus E* at 70°C of 30 to 150 MPa.

6. The airless tire (16) according to any one of claims 1 to 5, wherein the thermoplastic elastomer (4A) is a thermoplastic polyamide elastomer.

7. The airless tire (16) according to any one of claims 1 to 6, wherein the resin body (3) is formed from a thermoplastic polyester elastomer, a thermoplastic polyamide elastomer, or a thermoplastic polyurethane elastomer.

8. The airless tire (16) according to any one of claims 1 to 7, wherein the metal body (2) has a first surface (S) in contact with the adhesion layer (4) and has a recess-projection portion on the first surface (S).

9. A manufacturing method for the airless tire (16) according to any one of claims 1 to 8, the manufacturing method comprising:
a step of melting the thermoplastic resin or the thermoplastic elastomer (4A) for forming the adhesion layer (4);
a step of bringing the thermoplastic resin or the thermoplastic elastomer (4A) having been melted into contact with the hub portion (17) formed of the metal body (2);
a step of melting a resin (3A) for forming the spoke portion (19);
a step of bringing the resin (3A) in liquid form into contact with the thermoplastic resin or the thermoplastic elastomer (4A) having been brought into contact with the hub portion (17); and
a step of curing the thermoplastic resin or the thermoplastic elastomer (4A) and the resin (3A) so as to join together the hub portion (17) and the spoke portion (19) via the adhesion layer (4).

10. The manufacturing method, for the airless tire (16), according to claim 9, the manufacturing method further comprising
a step of, prior to the step of bringing the thermoplastic resin or the thermoplastic elastomer (4A) having been melted into contact with the metal body (2), forming a recess-projection portion on a first surface (S), of the metal body (2), with which the adhesion layer (4) is to be brought into contact.

11. The manufacturing method, for the airless tire (16), according to claim 9, the manufacturing method further comprising
a step of, prior to the step of bringing the thermoplastic resin or the thermoplastic elastomer (4A) having been melted into contact with the hub portion (17), forming a recess-projection portion on a first surface (S), of the hub portion (17), with which the adhesion layer (4) is to be brought into contact.

## Patentansprüche

1. Luftloser Reifen (16), der ein Schichtprodukt (1) umfasst, in dem ein Metallkörper (2) und ein Harzkörper (3) miteinander verbunden sind, wobei das Schichtprodukt (1) umfasst:
den Metallkörper (2); und
den Harzkörper (3),
wobei der luftlose Reifen (16) umfasst:
einen an einer Achse zu befestigenden Nabenabschnitt (17);
einen mit einem Boden in Kontakt zu bringenden ringförmigen Laufflächenring (18); und
einen Speichenabschnitt (19), der den Nabenabschnitt (17) und den Laufflächenring (18) miteinander verbindet, wobei
der Metallkörper (2) den Nabenabschnitt (17) bildet und
der Harzkörper (3) den Speichenabschnitt (19) bildet,
**dadurch gekennzeichnet, dass**
das Schichtprodukt (1) eine Haftschicht (4) umfasst, die zwischen dem Metallkörper (2) und dem Harzkörper (3) angeordnet ist, und ein thermoplastisches Harz oder ein thermoplastisches Elastomer (4A) enthält, wobei die Haftschicht (4) eine Formschrumpfung von nicht höher als 1,5 % aufweist.

2. Luftloser Reifen (16) nach Anspruch 1, wobei die Haftschicht (4) eine Dicke von 20 bis 200 µm aufweist.

3. Luftloser Reifen (16) nach Anspruch 1 oder 2, wobei die Haftschicht (4) eine Federkonstante von 3,0 bis 20,0 N/mm aufweist.

4. Luftloser Reifen (16) nach einem der Ansprüche 1 bis 3, wobei die Haftschicht (4) eine Zugscherfestigkeit bei 80 °C von nicht weniger als 1,0 MPa aufweist.

5. Luftloser Reifen (16) nach einem der Ansprüche 1 bis 4, wobei die Haftschicht (4) einen komplexen Elastizitätsmodul E* bei 70 °C von 30 bis 150 MPa aufweist.

6. Luftloser Reifen (16) nach einem der Ansprüche 1 bis 5, wobei das thermoplastische Elastomer (4A) ein thermoplastisches Polyamid-Elastomer ist.

7. Luftloser Reifen (16) nach einem der Ansprüche 1 bis 6, wobei der Harzkörper (3) aus einem thermoplastischen Polyester-Elastomer, einem thermoplastischen Polyamid-Elastomer oder einem thermoplastischen Polyurethan-Elastomer gebildet ist.

8. Luftloser Reifen (16) nach einem der Ansprüche 1 bis 7, wobei der Metallkörper (2) eine erste Oberfläche (S) aufweist, die mit der Haftschicht (4) in Kontakt steht, und auf der ersten Oberfläche (S) einen Vertiefungs-Vorsprungs-Abschnitt aufweist.

9. Herstellungsverfahren für den luftlosen Reifen (16) nach einem der Ansprüche 1 bis 8, wobei das Herstellungsverfahren umfasst:
einen Schritt des Schmelzens des thermoplastischen Harzes oder des thermoplastischen Elastomers (4A) zum Bilden der Haftschicht (4);
einen Schritt des In-Kontakt-Bringens des thermoplastischen Harzes oder thermoplastischen Elastomers (4A), das geschmolzen wurde, mit dem aus dem Metallkörper (2) gebildeten Nabenabschnitt (17);
einen Schritt des Schmelzens eines Harzes (3A) zum Bilden des Speichenabschnitts (19);
einen Schritt des In-Kontakt-Bringens des Harzes (3A) in flüssiger Form mit dem thermoplastischen Harz oder thermoplastischen Elastomer (4A), das mit dem Nabenabschnitt (17) in Kontakt gebracht wurde; und
einen Schritt des Aushärtens des thermoplastischen Harzes oder thermoplastischen Elastomers (4A) und des Harzes (3A), um den Nabenabschnitt (17) und den Speichenabschnitt (19) über die Haftschicht (4) miteinander zu verbinden.

10. Herstellungsverfahren für den luftlosen Reifen (16) nach Anspruch 9, wobei das Herstellungsverfahren zudem umfasst:
einen Schritt, vor dem Schritt des In-Kontakt-Bringens des geschmolzenen thermoplastischen Harzes oder thermoplastischen Elastomers (4A), das geschmolzen wurde, mit dem Metallkörper (2), des Bildens eines Vertiefungs-Vorsprungs-Abschnitts auf einer ersten Oberfläche (S) des Metallkörpers (2), mit der die Haftschicht (4) in Kontakt gebracht werden soll.

11. Herstellungsverfahren für den luftlosen Reifen (16) nach Anspruch 9, wobei das Herstellungsverfahren zudem umfasst:
einen Schritt, vor dem Schritt des In-Kontakt-Bringens des thermoplastischen Harzes oder thermoplastischen Elastomers (4A), das geschmolzen wurde, mit dem Nabenabschnitt (17), des Bildens eines Vertiefungs-Vorsprungs-Abschnitts auf einer ersten Oberfläche (S) des Nabenabschnitts (17), mit dem die Haftschicht (4) in Kontakt gebracht werden soll.

## Revendications

1. Pneu sans air (16) comprenant un produit stratifié (1) dans lequel un corps métallique (2) et un corps en résine (3) sont liés entre eux, le produit stratifié (1) comprenant :
le corps métallique (2) ; et
le corps en résine (3),
le pneu sans air (16) comprenant :
une partie de moyeu (17) destinée à être fixée à un axe ;
un anneau de bande de roulement annulaire (18) destiné à être mis en contact avec un sol ; et
une partie de rayon (19) reliant entre eux la partie de moyeu (17) et l'anneau de bande de roulement (18),
le corps métallique (2) formant la partie de moyeu (17), et
le corps en résine (3) formant la partie de rayon (19),
**caractérisé en ce que**
le produit stratifié (1) comprend une couche d'adhérence (4) disposée entre le corps métallique (2) et le corps en résine (3), et contient une résine thermoplastique ou un élastomère thermoplastique (4A), la couche d'adhérence (4) présentant un retrait de moulage n'étant pas supérieur à 1,5 %.

2. Pneu sans air (16) selon la revendication 1, dans lequel la couche d'adhérence (4) présente une épaisseur de 20 à 200 µm.

3. Pneu sans air (16) selon la revendication 1 ou 2, dans lequel la couche d'adhérence (4) présente une constante de rappel de 3,0 à 20,0 N/mm*.*

4. Pneu sans air (16) selon l'une quelconque des revendications 1 à 3, dans lequel la couche d'adhérence (4) présente une résistance au cisaillement en traction à 80 °C n'étant pas inférieure à 1,0 MPa.

5. Pneu sans air (16) selon l'une quelconque des revendications 1 à 4, dans lequel la couche d'adhérence (4) présente un module d'élasticité complexe E* à 70 °C de 30 à 150 MPa.

6. Pneu sans air (16) selon l'une quelconque des revendications 1 à 5, dans lequel l'élastomère thermoplastique (4A) est un élastomère de polyamide thermoplastique.

7. Pneu sans air (16) selon l'une quelconque des revendications 1 à 6, dans lequel le corps en résine (3) est formé à partir d'un élastomère de polyester thermoplastique, d'un élastomère de polyamide thermoplastique ou d'un élastomère de polyuréthane thermoplastique.

8. Pneu sans air (16) selon l'une quelconque des revendications 1 à 7, dans lequel le corps métallique (2) présente une première surface (S) en contact avec la couche d'adhérence (4) et présente une partie d'évidement-saillie sur la première surface (S).

9. Procédé de fabrication du pneu sans air (16) selon l'une quelconque des revendications 1 à 8, le procédé de fabrication comprenant :
une étape de fusion de la résine thermoplastique ou de l'élastomère thermoplastique (4A) pour former la couche d'adhérence (4) ;
une étape de mise en contact de la résine thermoplastique ou de l'élastomère thermoplastique (4A) ayant été fondu avec la partie de moyeu (17) formée par le corps métallique (2) ;
une étape de fusion d'une résine (3A) pour former la partie de rayon (19) ;
une étape de mise en contact de la résine (3A) à l'état liquide avec la résine thermoplastique ou l'élastomère thermoplastique (4A) ayant été mise en contact avec la partie de moyeu (17) ; et
une étape de durcissement de la résine thermoplastique ou de l'élastomère thermoplastique (4A) et de la résine (3A) de manière à lier entre eux la partie de moyeu (17) et la partie de rayon (19) par l'intermédiaire de la couche d'adhérence (4).

10. Procédé de fabrication du pneu sans air (16), selon la revendication 9, le procédé de fabrication comprenant en outre
une étape, avant l'étape de mise en contact de la résine thermoplastique ou de l'élastomère thermoplastique (4A) ayant été fondu avec le corps métallique (2), de formation d'une partie d'évidement-saillie sur une première surface (S) du corps métallique (2), avec laquelle la couche d'adhérence (4) est destinée à être mise en contact.

11. Procédé de fabrication du pneu sans air (16), selon la revendication 9, le procédé de fabrication comprenant en outre
une étape, avant l'étape de mise en contact de la résine thermoplastique ou de l'élastomère thermoplastique (4A) ayant été fondu avec la partie de moyeu (17), de formation d'une partie d'évidement-saillie sur une première surface (S) de la partie de moyeu (17), avec laquelle la couche d'adhérence (4) est destinée à être mise en contact.
